# EUROPÄISCHE PATENTSCHRIFT

(11) **EP 0 930 174 B1**
(45) Veröffentlichungstag und Bekanntmachung des Hinweises auf die Patenterteilung: **16.04.2003**
(21) Anmeldenummer: 99106260.5
(22) Anmeldetag: 23.12.1994
(51) Int. Cl.: B42D 15/00

(54) **Sicherheitspapier mit einem faden- oder bandförmigen Sicherheitselement sowie Verfahren zur Herstellung desselben**
Security paper with thread- or tape-like security element
Papier de sécurité contenant un élément de sécurité en forme de fil ou de bande

(30) Priorität: 24.12.1993 DE 4344553
(43) Veröffentlichungstag der Anmeldung: 21.07.1999
(62) Teilanmeldung aus: 94120570.0
(73) Patentinhaber: Giesecke & Devrient GmbH, 81667 München (DE)
(72) Erfinder: Burchard, Theo, Dr., 83703 Gmund/Tegernsee (DE); Schmitz, Christian, 83727 Schliersee (DE); Böhm, Michael, 85551 Kirchheim (DE)
(74) Vertreter: Höhfeld, Jochen

(56) Entgegenhaltungen:
- EP-A- 0 330 733
- DE-A- 4 041 025

## Beschreibung

Die Erfindung betrifft ein Sicherheitspapier mit einem Sicherheitselement in Form eines Fadens oder Bandes, das aus einer lichtdurchlässigen Kunststoffolie mit zumindest teilweise opaker Beschichtung besteht, wobei die Beschichtung lichtdurchlässige Bereiche in Form von visuell und/oder maschinell lesbaren Zeichen oder Mustern aufweist, die eine erste Information bilden.

Banknoten und andere geldwerte Papiere wie Schecks, Aktien, Reiseschecks, Scheck- und Kreditkarten, aber auch Pässe und Identitätskarten werden häufig durch Einfügen oder Aufbringen von sogenannten Sicherheitsfäden gegen Fälschungen abgesichert. Papiere dieser Art sollen im folgenden als Sicherheitspapiere bezeichnet werden. Die hierfür verwendeten Sicherheitsfäden bestehen aus verschiedensten Materialien in Form von Fäden oder Bändern mit einer Breite von 0,4 bis 10 mm. Sie bestehen vorwiegend aus Kunststoffolien, welche metallisch beschichtet, bedruckt, eingefärbt oder auch z. B. mit pigmentförmigen Substanzen versehen sind. Darüber hinaus ist es auch bekannt, den Sicherheitsfäden durch Auswahl entsprechender Substanzen magnetische, fluoreszierende, röntgenabsorbierende oder andere Eigenschaften zu verleihen.

Metallisch beschichtete Fäden werden in jüngster Zeit in zunehmenden Maße für Sicherheitspapiere eingesetzt. Diese Fäden, die teilweise oder ganz im Inneren des Papiers angeordnet werden, sind im auffallenden Licht nahezu unsichtbar. Denn die durch die obere Papierschicht dringenden Lichtstrahlen werden an der metallischen Oberfläche vollständig reflektiert und im Papier diffus gescreut. Im Durchlicht erscheinen derartige Fäden hingegen als schwarze Streifen, die sich von ihrer Umgebung deutlich abheben. Fäden dieser Art können durch einen Aufdruck auf das Papier nicht imitiert werden. Zur weiteren Erhöhung der Fälschungssicherheit wurde auch bereits vorgeschlagen, derartige aluminiumbedampfte Sicherheitsfäden mit einer Mikroschrift zu versehen (DE-OS 14 46 851). Dies hat sich aber in der Praxis als wenig sinnvoll herausgestellt, da diese Schrift auf dem sonst undurchsichtigen Sicherheitsfaden im Durchlicht nicht und im Auflicht nur sehr schwer erkennbar ist. Selbst wenn derartige Sicherheitsfäden, wie in der EP-PS 0 059 056 beschrieben, als sogenannte Fensterfäden in das Papier eingebracht werden, bleibt der Mikrodruck im bedruckten Papier schwer auffindbar.

Aus der EP-OS 0 279 880 ist ein Sicherheitsfaden aus transparentem Folienmaterial bekannt, auf welchem metallisch glänzende Mikroschriftzeichen vorgesehen sind. Die Mikroschriftzeichen sind wegen der Einbettung des Fadens in der Banknote im Auflicht nicht erkennbar. Im Durchlicht hingegen sind ausschließlich nur die Schriftzeichen erkennbar, da der Sicherheitsfaden selbst transparent ausgeführt ist. Dem Betrachter zeigt sich also im Durchlicht nur noch ein die Banknote durchziehender Schriftzug, der wegen der Kleinheit der Schriftzeichen, seiner Einbettung in die Papiermasse und eventuell einem darüberliegenden Druckbild nur schwer auffindbar ist. Die Nachahmung eines solchen Fadens ist dagegen wegen der geringen Größe der Mikroschriftzeichen erschwert.

Bei einem weiteren aus der EP-OS 0 330 733 bekannten Sicherheitsfaden wird eine lichtdurchlässige Kunststoffolie, die farbig ausgeführt sein kann, mit einer vollflächigen opaken, insbesondere metallischen Beschichtung versehen, in der Aussparungen in Form von Zeichen oder Mustern erzeugt werden. Der Faden ist im Durchlicht als dunkler Streifen im Dokument erkennbar, während sich die Schriftzeichen und Muster gegenüber ihrer direkten Umgebung, der opaken Fadenbeschichtung, und zusätzlich gegenüber der weiteren Umgebung, dem Dokumentenmaterial, als helle, eventuell farbige Flächen gut erkennbar abheben. Der Faden ist damit im Dokument sehr gut auffindbar während die Schriftzeichen bei entsprechender Größe jederzeit auch ohne Hilfsmittel lesbar sind.

Die Herstellung metallisierter Sicherheitsfäden erfolgt durch großflächiges Bedampfen einer transparenten Folie mit einer dünnen Metallschicht, z. B. aus Aluminium. Zur Erzeugung metallischer Schriftzeichen wird die bedampfte Folie gemäß dem in der EP-OS 0 279 880 beschriebenen Verfahren unter Verwendung einer säurefesten Druckfarbe mit den Mikroschriftzeichen bedruckt und anschließend einem Ätzprozeß unterworfen, in dem die nicht bedruckten Bereiche entfernt werden, so daß die metallischen Schriftzeichen auf der transparenten Folie übrigbleiben.

Die Erzeugung zeichenförmiger Aussparungen in der Beschichtung der Folie kann beispielsweise, wie in der EP-OS 0 330 733 beschrieben, nach einem Waschverfahren erfolgen, bei dem die Zeichen vor dem Bedampfen mit einer löslichen Farbe auf die Folie gedruckt werden. Nach dem Beschichtungsvorgang wird die lösliche Farbe sowie die darüberliegende Metallschicht in einem geeigneten Lösungsmittelbad entfernt

Der Erfindung liegt nun die Aufgabe zugrunde, ein Sicherheitspapier mit einem faden- oder bandförmigen Sicherheitselement herzustellen, das einen hohen Fälschungsschutz bietet, gleichzeitig aber eine gute Erkennbarkeit des Sicherheitselements sowie der Zeichen ohne technische Hilfsmittel gewährleistet Diese Aufgabe wird durch die im Kennzeichen des Hauptanspruchs genannten Merkmale gelöst. Weiterbildungen der Erfindung sowie ein Verfahren zur Herstellung eines derartigen Sicherheitspapiers sind Gegenstand unterund nebengeordneter Ansprüche.

Die Erfindung ist im wesentlichen dadurch gekennzeichnet, auf einem Sicherheitsfaden wenigstens zwei Arten von Informationen vorzusehen, die auf dem Faden nebeneinander angeordnet oder auf andere Weise miteinander kombiniert, eine hohe Fälschungssicherheit des Fadens und damit auch des Sicherheitspapieres bei gleichzeitig guter Erkennbarkeit gewährleisten.

In einer ersten Ausführungsform weist das erfindungsgemäße Sicherheitspapier einen Sicherheitsfaden aus transparentem Kunststoff auf, der in voneinander beabstandeten Bereichen eine sogenannte Negativschrift trägt, d. h. eine opake, insbesondere metallische, Beschichtung mit Aussparungen in Form von Zeichen oder Mustern. In den metallfreien Zwischenbereichen befindet sich ein beliebiger Aufdruck, der ohne zusätzliche Hilfsmittel visuell erkennbar ist. Dieser Faden wird vorzugsweise als Fensterfaden in das Papier eingebracht. Die Negativschrift bietet aufgrund des bereits geschilderten Auflicht-/Durchlicht-Effekts im Papier einen guten Kopierschutz, da dieses Verhalten weder mit einem Kopiergerät, noch mit einem Aufdruck imitiert werden kann. Zusätzlich ermöglichen die opaken Bereiche eine einfache Lokalisierung des Fadens im Dokument, da sie einen guten Kontrast zur Umgebung bieten, so daß auch der zwischen den opaken Bereichen angeordnete Aufdruck sehr einfach auffindbar und lesbar ist. Dieser im folgenden als Positivschrift bezeichnete Aufdruck erschwert Fälschungen, die darauf beruhen, den oberflächlichen optischen Eindruck des Fadens im Bereich der Fenster zu imitieren. Denn insbesondere bei der metallischen Negativschrift wird der optische Eindruck in erster Linie durch den metallischen Glanz des Fadens beherrscht, so daß die Aussparungen und die hiermit dargestellten Informationen in den Hintergrund rücken.

Darüber hinaus führt die Anwendung unterschiedlicher Herstellungstechniken für Positiv- bzw. Negativschrift, die so aufeinander abgestimmt sein müssen, daß sie sich gegenseitig nicht beeinträchtigen, zu einer weiteren Erhöhung der Fälschungssicherheit. Die Negativschrift wird beispielsweise mittels eines Waschverfahrens erzeugt, wie es aus der EP-OS 0 330 733 bekannt ist. Hierbei wird zunächst auf eine Folie das Druckbild aufgedruckt, wie es später in der opaken Beschichtung als Negativbild erscheinen soll, und erst in einem zweiten Verfahrensschritt wird die opake Beschichtung, z. B. eine Metallbeschichtung, aufgebracht. Für die Aufbringung des Druckbildes werden dabei Druckfarben oder Lacke verwendet, die entweder zur Folie und/oder zu der Beschichtung eine geringe Haftung aufweisen, so daß entweder die Beschichtung alleine oder zusammen mit der Druckfarbe entfernt werden kann. Vorzugsweise werden Druckfarben verwendet, die sich unter der Metallbeschichtung wieder chemisch lösen lassen. Passergenau zu den derart erzeugten Negativschriftbereichen muß in den Zwischenbereichen der visuell lesbare Aufdruck aufgebracht werden. Dieser Druckvorgang kann in den Herstellungsprozeß der Negativschrift integriert werden, indem die Trägerfolie des Sicherheitselements zuerst mit einer waschfesten Farbe entsprechend dem später erkennbaren Positiv-Aufdruck bedruckt wird und im Anschluß daran das entfernbare Druckbild aufgebracht wird. Alternativ können die beiden Druckbilder auch gleichzeitig in einem Druckvorgang aufgedruckt werden. Bei dem nach der Beschichtung erfolgenden Waschvorgang wird nur die lösliche Farbe entfernt.

Der Hintergrund der Negativschrift kann jedoch auch gedruckt werden, z. B. mit einer metallischen Druckfarbe. Wird diese gedruckte Negativschrift mit einem komplizierten mehrfarbigen Positivdruck gemäß den obigen Ausführungen kombiniert, entsteht ebenfalls ein schwer imitierbares Sicherheitselement. So wäre es beispielsweise denkbar, den Faden landesspezifisch auszugestalten, wobei die negativ dargestellte Information den Landesnamen und die positiv gedruckte Information originalgetreu und in allen Einzelheiten die Flagge des jeweiligen Landes wiedergibt.

Der besondere Schutzeffekt des erfindungsgemäßen Sicherheitselements ergibt sich somit aus der Kombination der Negativschrift, die aufgrund des Auflicht-/Durchlicht-Effekts nicht kopierbar ist, mit einer insbesondere im Auflicht gut erkennbaren weiteren Information.

Durch die auch im Auflicht erkennbaren großen Zeichen werden darüber hinaus Fälschungen vermieden, die lediglich den metallischen Glanzeffekt imitieren.

Als opake Beschichtungsmaterialien eignen sich neben Metallschichten auch andere bei Betrachtung im Durchlicht zur Umgebung farblich und/oder im Grauton kontrastierende nichtmetallische Schichten, wie z. B deckende, vorzugsweise weiße Farbschichten, metallisch glänzende Schichten, wie z. B. Titannitrid oder Interferenzschichten, wie sie beispielsweise aus der US-PS 3,858,977 bekannt sind.

Ebenso kann das Kunststoffsubstrat mit nichtdeckenden, vorzugsweise lasierenden Druckfarben in verschiedenen Farben und Tönungen versehen werden. Die Folie kann jedoch auch mit entsprechenden Farbmitteln so eingefärbt werden, daß in einem Teilbereich des visuell zugänglichen Spektrums die Transparenz erhalten bleibt. Durch Verwendung lumineszierender Farben kann der visuelle Eindruck des Fadenmaterials noch weiter verbessert und effektvoller ausgeführt werden. Die Lumineszenzfarben können entweder im nicht angeregten Zustand farblos sein oder eine Körperfarbe besitzen, die sich vorzugsweise von der Farbe des Emissionslichts unterscheidet. Die Schriftzeichen oder Muster erscheinen dann erst im Anregungslicht farbig bzw. wechseln ihre Farbe, wenn der Faden, z. B. unter UV-Licht, betrachtet wird. Mehrere in unterschiedlichen Farben emittierende Lumineszenzstoffe erhöhen sowohl die gestalterischen Möglichkeiten als auch die Fälschungssicherheit, da zur exakten Nachahmung die Analyse jedes einzelnen Lumineszenzstoffs notwendig ist Diese Analyse kann in einfacher Weise noch weiter erschwert werden, in dem die verschiedenen Lumineszenzfarben gemischt oder überlappend aufgedruckt werden.

Weitere vorteilhafte Ausführungsformen werden anhand der Figuren erläutert. Zur besseren Anschaulichkeit wird in den Figuren auf eine maßstabs- und proportionsgetreue Darstellung verzichtet.

Die Figuren zeigen:
- Fig. 1: Sicherheitsdokument gemäß der Erfindung,
- Fig. 2 - 6: verschiedene Varianten einer ersten bevorzugten Ausführungsform des erfindungsgemäßen Sicherheitselements,
- Fig. 7: Schichtaufbau bei der Herstellung des Sicherheitselements gemäß Fig. 6,
- Fig. 8: Variante einer weiteren bevorzugten Ausführungsform des erfindungsgemäßen Sicherheitselements.

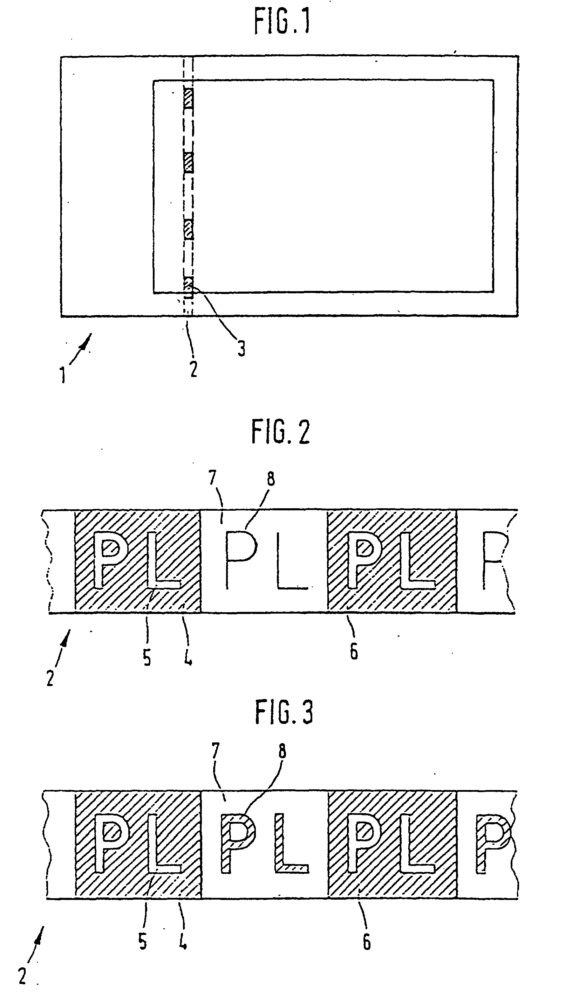

Fig. 1 zeigt ein erfindungsgemäßes Sicherheitsdokument, hier eine Banknote 1, in welche ein Fenstersicherheitsfaden 2 eingebettet ist, der in bestimmten Bereichen 3 direkt an die Dokumentenoberfläche tritt. Es ist jedoch ebenso möglich, den Faden je nach Breite und gewünschtem Effekt vollständig in das Dokument einzubetten oder so in dem Dokument zu verankern, daß er als über die gesamte Breite des Dokuments sichtbarer Streifen erscheint. Im folgenden werden die verschiedenen Ausführungsvarianten des Sicherheitselements 2 näher erläutert.

In Fig. 2 ist eine der bevorzugten Ausführungsformen des erfindungsgemäßen Sicherheitselements 2 dargestellt. Es besteht aus einer transparenten Kunststoffschicht 6, die in Teilbereichen mit einer metallischen Beschichtung 4 versehen ist, die Aussparungen 5 in Form von Zeichen oder Mustern aufweist. In den metallfreien Zwischenbereichen 7 befindet sich ein Aufdruck 8, der farblich beliebig gestaltet sein kann. Möglich wäre beispielsweise eine landesspezifische Ausgestaltung des Fadens, bei welcher z. B. die Flagge des jeweiligen Landes originalgetreu im mehrfarbigen Positivdruck und der Name des Landes im metallischen Negativdruck dargestellt wird. Diese Informationen werden erfindungsgemäß mehrmals und in abwechselnder Reihenfolge längs des Fadens aufgebracht.

Für den positiven Aufdruck 8 können allerdings auch metallische oder metallisch wirkende Druckfarben Verwendung finden. Eine derartige Fadenvariante ist in Fig. 3 dargestellt. Die Positivschrift 8 kann z. B. mit einer silbrigen Druckfarbe aufgebracht werden. Ebenso ist es möglich, die Negativschrift 4, 5 mit beliebigen opaken Druckfarben aufzudrucken. Alternativ können auch beide Informationen durch eine metallische Beschichtung dargestellt werden. In diesem Fall besteht nicht nur der Hintergrund 4 der Negativschrift sondern auch die Positivschrift 8 aus Metall.

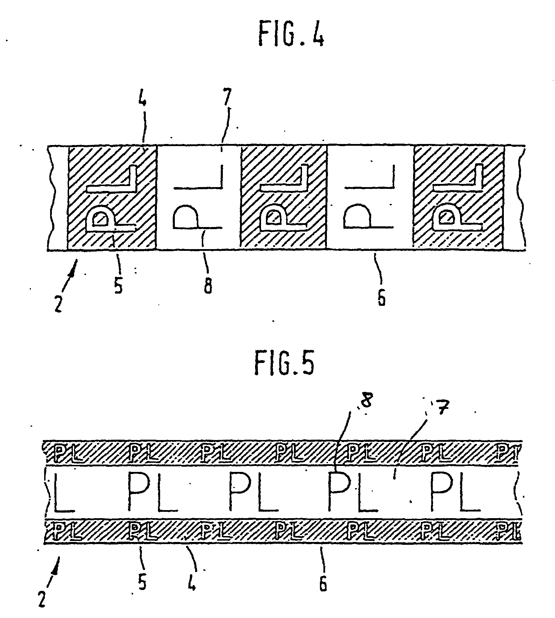

Insbesondere bei breiten Fäden (ab etwa 4 mm) können die Zeichen 5, 8 auch quer zur Laufrichtung des Fadens angeordnet sein, wie in Fig. 4 gezeigt. Dies erhöht die Lesbarkeit der Zeichen in den Fensterbereichen und deren Fälschungssicherheit, da je nach Schrifthöhe eine bestimmte Anzahl an Rapporten pro Fenster sichtbar ist und dieses Erscheinungsbild nur mit hohem Aufwand imitiert werden kann.

Gemäß einer weiteren Variante ist es auch möglich, metallische und metallfreie Bereiche in parallel verlaufenden Streifen anzuordnen. Diese Ausführungsform zeigt Fig. 5. Hier wird der Aufdruck 8 in der Fadenmitte aufgebracht und symmetrisch hierzu in den Randbereichen die Negativschrift 4, 5 angeordnet. Der umgekehrte Fall, daß die gedruckte Positivschrift die mittig angeordnete Negativschrift umrahmt, ist selbstverständlich ebenfalls möglich. Der sich über die gesamte Fadenlänge erstreckende metallische Hintergrund der Negativschrift ermöglicht ein leichtes Auffinden des Fadens im Papier. Darüber hinaus sind die großen Schriftzeichen relativ gut erkennbar, während die kleinen Schriftzeichen visuell schwieriger erkennbar aber auch schwieriger nachahmbar sind.

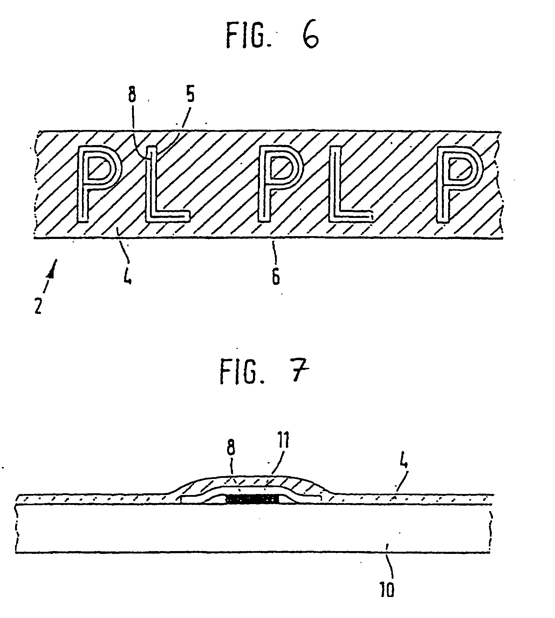

Alternativ können der Aufdruck und die Aussparungen in der Metallisierung gleiche Gestalt haben, so daß sie ineinander angeordnet werden können (Fig. 6). Dies bedeutet, daß die Aussparungen 5 in der Metallschicht 4 gleichzeitig die Zwischenbereiche 7 darstellen, in welche der Aufdruck 8 eingebracht wird.

Die Herstellung dieser Sicherheitsfäden erfolgt ausgehend von einer transparenten oder zumindest lichtdurchlässigen Folie nach dem oben beschriebenen Verfahren. Die Folie kann hierbei eine Eigenfarbe aufweisen oder mit einer transluzenten Grundfarbschicht bedruckt sein, die eventuell zusätzlich mit Lumineszenzstoffen versetzt ist.

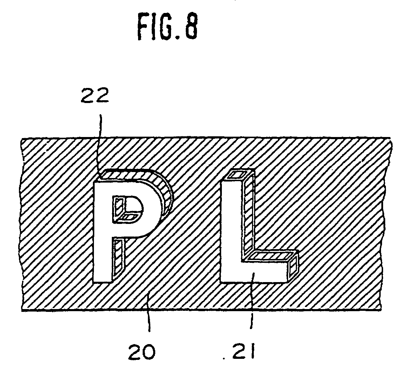

Fig. 7 zeigt den Schichtaufbau einer präparierten Kunststoffolie 10, wie sie bei der Herstellung eines Fadens 2 gemäß Fig. 6 eingesetzt wird. Zuerst wird die bahnförmige Folie 10 mit einer Positivschrift 8 versehen. Die Strichbreite kann hierbei beispielsweise 100 µm und die Schrifthöhe ca. 1 mm betragen. Über diese Positivschrift wird ein weiterer Aufdruck 11 aufgebracht, der in den Dimensionen der späteren Negativschrift entspricht. In diesem Beispiel beträgt die Strichbreite ca. 300 um und die gewählte Schrifthöhe etwa 1,5 mm. Anschließend erhält die Folie 10 eine vollflächige Metallisierung 4, die beispielsweise im Vakuumdampfverfahren auf der Folie 10 niedergeschlagen wird. In einem geeigneten Lösungsmittelbad wird nun die Druckfarbenschicht 11 zusammen mit der darüberliegenden Metallisierung entfernt, so daß der Aufdruck 8 sichtbar wird. In einem letzten Schritt wird die Folie 10 in Streifen gewünschter Breite, z. B. 2 mm, geschnitten und auf Rollen gelagert, bis sie in das Dokumentenmaterial eingebracht wird. Im vorliegenden Beispiel wird das Fadenmaterial während der Papierherstellung an das Papiersieb herangeführt und dort in die sich bildende Papierbahn vorzugsweise als Fensterfaden eingewebt Die übrigen dargestellten Fadenvarianten werden nach analogen Verfahren hergestellt.

Bei der Wahl der Druckfarben ist selbstverständlich darauf zu achten, daß die für den Druck der Positivschrift verwendete Farbe von dem Lösungsmittelbad nicht angegriffen wird.

Die Herstellung dieser Fadenvarianten kann nach dem oben beschriebenen Waschverfahren erfolgen oder nach einem anderen bekannten Demetallisierungsverfahren, z. B. nach einem der in der EP-OS 0 330 733 beschriebenen Verfahren, auf die in diesem Zusammenhang ausdrücklich Bezug genommen wird. Ebenso ist es möglich, die Negativschrift mit metallpigmenthaltigen Druckfarben oder metallisch glänzenden Farben aufzudrucken. Es können Strichstärken und Schrifthöhen sehr kleiner Dimensionen erzeugt werden, so daß sie für das Auge kaum mehr auflösbar sind. In diesem Fall kann die Überprüfung nurmehr maschinell erfolgen. Eine maschinelle Überprüfung ist allerdings auch bei allen anderen Fadenvarianten gemäß der Erfindung möglich.

Bei allen oben beschrieben Ausführungsformen kann die Nachahmbarkeit des Schriftbildes noch weiter erhöht werden, wenn die aufgebrachten Informationen mit einem Schattenrand versehen werden, so daß der Eindruck von Dreidimensionalität entsteht. Fig. 8 zeigt eine entsprechende Ausführungsform. Aus Gründen der Anschaulichkeit wird hier lediglich ein eine Negativschrift aufweisender Bereich des erfindungsgemäßen Sicherheitsfadens stark vergrößert dargestellt. Um den visuellen Effekt dieser Variante zu verdeutlichen, wird die opake Hintergrundbeschichtung 20 in diesem Beispiel vollflächig dargestellt und nicht schraffiert, wie in den vorhergehenden Figuren. Die metallische Beschichtung 20 weist in diesem Fall nicht nur im Bereich des Zeichens 21 eine Aussparung auf, sondern auch im Bereich 22. Durch die besondere Linienführung der Aussparungen 22, die den Umrißlinien eines Schattens entsprechend, entsteht der Eindruck, daß das Zeichen eine gewisse Tiefe besitzt. Derartige quasi dreidimensionale Zeichen oder Muster können sowohl nach dem beschriebenen Demetallisierungsverfahren als auch drucktechnisch erzeugt werden. Selbstverständlich kann im Umkehrschluß der dreidimensionale Eindruck auch bei im Positivdruck dargestellten Zeichen hervorgerufen werden.

## Patentansprüche

1. Sicherheitspapier mit einem Sicherheitselement (2) in Form eines Fadens oder Bandes, das aus einer lichtdurchlässigen Kunststoffolie mit zumindest teilweiser opaker Beschichtung besteht, wobei die Beschichtung lichtdurchlässige Bereiche in Form von visuell und/oder maschinell lesbaren Zeichen oder Mustern aufweist, die eine erste Information bilden, und auf der Kunststoffolie (6) eine zweite Information (8) in Form von visuell und/oder maschinell lesbaren Zeichen oder Mustern angeordnet ist, **dadurch gekennzeichnet, daß** die zweite Information als Positivschrift (8) dargestellt ist, die ein unbedrucktes Umfeld (7) aufweist.

2. Sicherheitspapier mit einem Sicherheitselement (2) in Form eines Fadens oder Bandes, das aus einer lichtdurchlässigen Kunststoffolie mit zumindest teilweiser opaker Beschichtung besteht, wobei die Beschichtung lichtdurchlässige Bereiche in Form von visuell und/oder maschinell lesbaren Zeichen oder Mustern aufweist, die eine erste Information bilden, und auf der Kunststoffolie (6,10) eine zweite Information (8) in Form von visuell und/oder maschinell lesbaren Zeichen oder Mustern angeordnet ist, **dadurch gekennzeichnet, daß** die zweite Information als Positivschrift (8) dargestellt ist und die gleiche Gestalt aufweist wie die erste Information und daß die erste und die zweite Information derart ineinander angeordnet sind, daß die zweite Information ein unbedrucktes Umfeld aufweist.

3. Sicherheitspapier nach Anspruch 1 oder 2, **dadurch gekennzeichnet, daß** die zweite Information (8) ein Aufdruck ist.

4. Sicherheitspapier nach Anspruch 3, **dadurch gekennzeichnet, daß** der Aufdruck (8) mit einer metallpigmenthaltigen bzw. metallisch wirkenden Druckfarbe ausgeführt ist.

5. Sicherheitspapier nach Anspruch 1, **dadurch gekennzeichnet, daß** die zweite Information (8) eine metallische Beschichtung ist.

6. Sicherheitspapier nach wenigstens einem der Ansprüche 1-5, **dadurch gekennzeichnet, daß** die erste und zweite Information (4, 5, 8) alternierend entlang des Sicherheitselements (2) angeordnet sind.

7. Sicherheitspapier nach wenigstens einem der Ansprüche 1-5, **dadurch gekennzeichnet, daß** die erste and zweite Information (4, 5, 8) entlang des Sicherheitselements (2) parallel zueinander angeordnet sind.

8. Sicherheitspapier nach wenigstens einem der Ansprüche 1-7, **dadurch gekennzeichnet, daß** die Breite des Sicherheitselements (2) in Laufrichtung gesehen variiert.

9. Sicherheitspapier nach wenigstens einem der Ansprüche 1-8, **dadurch gekennzeichnet, daß** die opake Beschichtung (4) ein metallisch wirkender Aufdruck oder eine Vakuummetallisierung ist.

10. Sicherheitspapier nach wenigstens einem der Ansprüche 1-9, **dadurch gekennzeichnet, daß** das Sicherheitselement (2) als Fensterfaden in das Sicherheitspapier eingebettet ist.

11. Sicherheitselement (2) zur Einbettung in ein Sicherheitspapier in Form eines Fadens oder Bandes, das aus einer lichtdurchlässigen Kunststoffolie mit zumindest teilweiser opaker Beschichtung besteht, wobei die Beschichtung lichtdurchlässige Bereiche in Form von visuell und/oder maschinell lesbaren Mustern aufweist, die eine ersten Information bilden, und auf der Kunststofffolie (6) eine zweite Information (8) in Form von visuell und/oder maschinell lesbaren Zeichen oder Mustern angeordnet ist, **dadurch gekennzeichnet, daß** die zweite Information als Positivschrift (8) dargestellt ist, die ein unbedrucktes Umfeld (7) aufweist.

12. Sicherheitselement (2) zur Einbettung in ein Sicherheitspapier in Form eines Fadens oder Bandes, das aus einer lichtdurchlässigen Kunststoffolie mit zumindest teilweiser opaker Beschichtung besteht, wobei die Beschichtung lichtdurchlässige Bereiche in Form von visuell und/oder maschinell lesbaren Mustern aufweist, die eine ersten Information bilden, und auf der Kunststoffolie (6,10) eine zweite Information (8) in Form von visuell und/oder maschinell lesbaren Zeichen oder Mustern angeordnet ist, **dadurch gekennzeichnet, daß** die zweite Information als Positivschrift (8) dargestellt ist und die gleiche Gestalt aufweist wie die erste Information und daß die erste und die zweite Information derart ineinander angeordnet sind, daß die zweite Information ein unbedrucktes Umfeld aufweist.

13. Verfahren zur Herstellung eines Sicherheitselements (2) gemäß Anspruch 11 oder 12 in Form eines Fadens oder Bandes, wobei eine lichtdurchlässige Kunststoffolie (6,10) bereitgestellt wird, auf welcher zumindest die erste Information in Form von Zeichen oder Mustern unter Verwendung einer löslichen Druckfarbe aufgedruckt wird und die zweite Information (8) in Form von Zeichen oder Mustern unter Verwendung einer nichtlöslichen Druckfarbe aufgedruckt wird und die so bedruckte Folie anschließend mit einer opaken Beschichtung (4) versehen wird, die lösliche Druckfarbe unter Verwendung von Lösungsmitteln in einem Lösungsbad wieder angelöst und somit die lösliche Druckfarbe und die darüberliegende opake Beschichtung (4) entfernt wird, und die so präparierte Folie in Streifen vorbestimmter Breite geschnitten wird.

14. Verfahren nach Anspruch 13, **dadurch gekennzeichnet, daß** die lösliche Druckfarbe auch in den das unbedruckte Umfeld bildenden Zwischenbereichen (7) aufgedruckt wird.

15. Verfahren nach Anspruch 13, **dadurch gekennzeichnet, daß** die zweite Information (8) zuerst aufgedruckt wird und die erste Information über dieser zweiten Information aufgebracht wird.

16. Verfahren nach Anspruch 13 oder 14, **dadurch gekennzeichnet, daß** die erste und zweite Information in einem Druckvorgang aufgebracht werden.

17. Verfahren nach wenigstens einem der Ansprüche 13 -16, **dadurch gekennzeichnet, daß** die opake Beschichtung aufgedruckt wird.

18. Verfahren nach wenigstens einem der Ansprüche 13 -16, **dadurch gekennzeichnet,** daßfür die opake Beschichtung eine Metallschicht verwendet wird, die entweder unter Verwendung von metallischen oder metallisch wirkenden Druckfarben aufgedruckt oder mittels eines Vakuummetallisierungsverfahrens aufgedampft wird.

## Claims

1. An antifalsification paper having a security element (2) in the form of a thread or band that consists of a translucent plastic film with an at least partly opaque coating, the coating having translucent areas in the form of visually and/or machine readable characters or patterns forming first information, and second information (8) in the form of visually and/or machine readable characters or patterns being disposed on the plastic film (6), **characterized in that** the second information is represented as positive writing (8) having unprinted surroundings (7).

2. An antifalsification paper having a security element (2) in the form of a thread or band that consists of a translucent plastic film with an at least partly opaque coating, the coating having translucent areas in the form of visually and/or machine readable characters or patterns forming first information, and second information (8) in the form of visually and/or machine readable characters or patterns being disposed on the plastic film (6, 10), **characterized in that** the second information is represented as positive writing (8) and has the same form as the first information, and the first and second information are disposed within each other such that the second information has unprinted surroundings.

3. The antifalsification paper of claim 1 or 2, **characterized in that** the second information (8) is a print.

4. The antifalsification paper of claim 3, **characterized in that** the print (8) is executed with a bronze or metallic-looking ink.

5. The antifalsification paper of claim 1, **characterized in that** the second information (8) is a metallic coating.

6. The antifalsification paper of at least one of claims 1 to 5, **characterized in that** the first and second information (4, 5, 8) are disposed alternatingly along the security element (2).

7. The antifalsification paper of at least one of claims 1 to 5, **characterized in that** the first and second information (4, 5, 8) are disposed parallel to each other along the security element (2).

8. The antifalsification paper of at least one of claims 1 to 7, **characterized in that** the width of the security element (2) varies, regarded in the running direction.

9. The antifalsification paper of at least one of claims 1 to 8, **characterized in that** the opaque coating (4) is a metallic-looking print or a vacuum metalization.

10. The antifalsification paper of at least one of claims 1 to 9, **characterized in that** the security element (2) is embedded in the antifalsification paper as a window thread.

11. A security element (2) to be embedded in an antifalsification paper in the form of a thread or band that consists of a translucent plastic film with an at least partly opaque coating, the coating having translucent areas in the form of visually and/or machine readable patterns forming first information, and second information (8) in the form of visually and/or machine readable characters or patterns being disposed on the plastic film (6), **characterized in that** the second information is represented as positive writing (8) having unprinted surroundings (7).

12. A security element (2) to be embedded in an antifalsification paper in the form of a thread or band that consists of a translucent plastic film with an at least partly opaque coating, the coating having translucent areas in the form of visually and/or machine readable characters or patterns forming first information, and second information (8) in the form of visually and/or machine readable characters or patterns being disposed on the plastic film (6, 10), **characterized in that** the second information is represented as positive writing (8) and has the same form as the first information, and the first and second information are disposed within each other such that the second information has unprinted surroundings.

13. A method for producing the security element (2) according to claim 11 or 12 in the form of a thread or band, a translucent plastic film (6, 10) being provided on which at least the first information in the form of characters or patterns is printed using a soluble ink, and the second information (8) in the form of characters or patterns is printed using an insoluble ink, and the thus printed film is then provided with an opaque coating (4), the soluble ink being dissolved again using solvents in a solution bath, and the soluble ink and the opaque coating (4) thereabove thus removed, and the thus prepared film being cut into strips of predetermined width.

14. The method of claim 13, **characterized in that** the soluble ink is also printed in the intermediate areas (7) forming the unprinted surroundings.

15. The method of claim 13, **characterized in that** the second information (8) is printed first and the first information is applied over said second information.

16. The method of claim 13 or 14, **characterized in that** the first and second information are applied in one printing operation.

17. The method of at least one of claims 13 to 16, **characterized in that** the opaque coating is printed on.

18. The method of at least one of claims 13 to 16, **characterized in that** a metal layer is used for the opaque coating that is either printed on using metallic or metallic-looking inks or deposited by a vacuum metalization method.

## Revendications

1. Papier de sécurité contenant un élément de sécurité (2) en forme de fil ou de bande, qui se compose d'une feuille en matière plastique translucide avec un revêtement au moins partiellement opaque, ledit revêtement présentant des zones translucides en forme de signes ou de points lisibles à l'oeil nu et/ou avec une machine, qui forment une première information, et sur la feuille en matière plastique (6) se trouve une seconde information (8) en forme de signes ou de points lisibles à l'oeil nu et/ou avec une machine, **caractérisé en ce que** la seconde information (8) est formée en positif et présente un environnement sans impression (7).

2. Papier de sécurité contenant un élément de sécurité (2) en forme de fil ou de bande, qui se compose d'une feuille en matière plastique translucide avec un revêtement au moins partiellement opaque, ledit revêtement présentant des zones translucides en forme de signes ou de points lisibles à l'oeil nu et/ou avec une machine, qui forment une première information, et sur la feuille en matière plastique (6, 10) se trouve une seconde information (8) en forme de signes ou de points lisibles à l'oeil nu et/ou avec une machine, **caractérisé en ce que** la seconde information est formée en positif (8) et présente la même forme que la première information, et **en ce que** la première et la seconde informations sont disposées l'une dans l'autre de telle façon que la seconde information présente un environnement sans impression.

3. Papier de sécurité selon la revendication 1 ou 2, **caractérisé en ce que** la seconde information (8) est une impression.

4. Papier de sécurité selon la revendication 3, **caractérisé en ce que** l'impression (8) est réalisée avec une encre contenant des pigments métalliques ou donnant des effets métalliques.

5. Papier de sécurité selon la revendication 1, **caractérisé en ce que** la seconde information (8) est un revêtement métallique.

6. Papier de sécurité selon au moins une des revendications 1 à 5, **caractérisé en ce que** la première et la seconde informations (4, 5, 8) sont disposées en alternance le long de l'élément de sécurité (2).

7. Papier de sécurité selon au moins une des revendications 1 à 5, **caractérisé en ce que** la première et la seconde informations (4, 5, 8) sont disposées parallèlement l'une à l'autre le long de l'élément de sécurité (2).

8. Papier de sécurité selon au moins une des revendications 1 à 7, **caractérisé en ce que** la largeur de l'élément de sécurité (2) varie, lorsque cet élément est considéré dans le sens de la fabrication.

9. Papier de sécurité selon au moins une des revendications 1 à 8, **caractérisé en ce que** le revêtement opaque (4) est une impression à effets métalliques ou une métallisation sous vide.

10. Papier de sécurité selon au moins une des revendications 1 à 9, **caractérisé en ce que** l'élément de sécurité (2) est incorporé comme fil d'encadrement dans le papier de sécurité.

11. Elément de sécurité (2) pour incorporation dans un papier de sécurité en forme de fil ou de bande, qui se compose d'une feuille en matière plastique translucide avec un revêtement au moins partiellement opaque, le revêtement présentant des zones translucides en forme de signes ou de points lisibles à l'oeil nu et/ou avec une machine, qui forment une première information, et sur la feuille en matière plastique (6) se trouve une seconde information (8) en forme de signes ou de points lisibles à l'oeil nu et/ou avec une machine, **caractérisé en ce que** la seconde information est formée en positif (8) et présente un environnement (7) sans impression.

12. Elément de sécurité (2) pour insertion dans un papier de sécurité en forme de fil ou de bande, qui se compose d'une feuille en matière plastique translucide avec un revêtement au moins partiellement opaque, le revêtement présentant des zones translucides en forme de signes ou de points lisibles à l'oeil nu et/ou avec une machine, qui forment une première information, et sur la feuille en matière plastique (6, 10) se trouve une seconde information (8) en forme de signes ou de points lisibles à l'oeil nu et/ou avec une machine, **caractérisé en ce que** la seconde information est formée en positif (8) et présente la même forme que la première information, et **en ce que** la première et la seconde informations sont disposées l'une dans l'autre de telle façon que la seconde information présente un environnement sans impression.

13. Procédé de fabrication d'un élément de sécurité (2) selon la revendication 11 ou 12 en forme de fil ou de bande, une feuille en matière plastique translucide (6, 10) étant préparée, sur laquelle au moins la première information est imprimée sous forme de signes ou de points en utilisant une encre délébile et la seconde information (8) est imprimée sous forme de signes ou de points en utilisant une encre indélébile et la feuille ainsi imprimée est ensuite pourvue d'un revêtement opaque (4), l'encre délébile est à nouveau dissoute en utilisant des agents solvants dans un bain de dissolution et ainsi, l'encre délébile et le revêtement opaque (4) la recouvrant sont éliminés, et la feuille ainsi préparée est découpée en bandelettes d'une largeur prédéterminée.

14. Papier de sécurité selon la revendication 13, **caractérisé en ce que** l'encre délébile est également imprimée dans les interstices (7) formant l'environnement sans impression.

15. Papier de sécurité selon la revendication 13, **caractérisé en ce que** la seconde information (8) est imprimée en premier lieu et que la première information est appliquée sur cette seconde information.

16. Papier de sécurité selon la revendication 13 ou 14, **caractérisé en ce que** les première et seconde informations sont appliquées par impression.

17. Papier de sécurité selon au moins une des revendications 13 à 16, **caractérisé en ce que** le revêtement opaque est imprimé.

18. Papier de sécurité selon au moins une des revendications 13 à 16, **caractérisé en ce qu'**une couche métallique est utilisée pour le revêtement opaque, qui est soit imprimée en utilisant des encres métalliques ou à effets métalliques, soit appliquée par vaporisation selon un procédé de métallisation sous vide.
